Europäisches Patentamt

European Patent Office

Office européen des brevets

(19)

(11) EP 0 831 323 A1

(12) EUROPÄISCHE PATENTANMELDUNG

(43) Veröffentlichungstag:
25.03.1998 Patentblatt 1998/13

(51) Int Cl.⁶: G01N 27/82

(21) Anmeldenummer: 97116353.0

(22) Anmeldetag: 19.09.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 21.09.1996 DE 19638776

(71) Anmelder: RBG Rohrnetzbau GmbH
58638 Iserlohn (DE)

(72) Erfinder:
• Shanaurin, H.A.
620141 Jekaterinburg (RU)
• Krawtschenko, H.G.
620078 Jekaterinburg (RU)
• Komiew, D.G.
620039 Jekaterinburg (RU)

(74) Vertreter: Schröter & Haverkamp
Patentanwälte
Im Tückwinkel 22
58636 Iserlohn (DE)

(54) **Verfahren zum zerstörungsfreien Prüfen eines Prüflings mit einer Schweissnaht aus magnetisierbarem Material**

(57) Ein Verfahren zum zerstörungsfreien Prüfen einer zwei magnetisierbare Teilstücke 3, 4 verbindenden Schweißnaht 5 umfaßt folgende Schritte: Magnetisieren des aus den Teilstücken 3, 4 und der Schweißnaht 5 bestehenden Prüflings 1 mit einem Magnetfeld 2, dessen magnetische N-S-Ausrichtung quer zur Längserstreckung der Schweißnaht 5 angeordnet ist und Aneinandervorbeibewegen einer Magnetfelddetektionsvorrichtung 9, und der Schweißnaht 5 in Längserstreckung der Schweißnaht 9 sowie Erfassen der durch Fehler in der Schweißnaht verursachten magnetischen Streufelder mit der Magnetfelddetektionsvorrichtung 9, wobei mit der Magnetfelddetektionsvorrichtung 9 eine oder mehrere Resultierende erfaßt werden, die ausgesucht sind aus $\partial H_x/\partial x$, $\partial H_y/\partial x$, $\partial H_z/\partial x$ und $\partial H_x/\partial y$, wobei x, y, z Koordinatenachsen eines orthogonalen Koordinatensystems sind, bei welchem die x-Achse der Längserstreckung der Schweißnaht 5 folgt, die y-Achse parallel zur Magnetisierungsrichtung des Prüflings 1 und die z-Achse senkrecht zur Prüflingsoberfläche angeordnet sind, wobei in einem ersten Meßschritt eine Fehlererkennung durch Erfassen des Gradienten einer der Magnetfeldkomponenten erfolgt.

*Fig. 2*

EP 0 831 323 A1

**Beschreibung**

Die Erfindung betrifft ein Verfahren zum zerstörungsfreien Prüfen eines Prüflings aus magnetisierbarem Material. Insbesondere betrifft die Erfindung ein Verfahren zum zerstörungsfreien Prüfen einer zwei magnetisierbare Prüflingsstücke verbindenden Schweißnaht mit folgenden Schritten: Magnetisieren des aus den Teilstücken und der Schweißnaht bestehenden Prüflings mit einem Magnetfeld, dessen magnetische N-S-Ausrichtung quer zur Längserstreckung der Schweißnaht angeordnet ist, und Aneinandervorbeibewegen einer Magnetfelddetektionsvorrichtung und der Schweißnaht in Längserstreckung der Schweißnaht sowie Erfassen der durch Fehler in der Schweißnaht verursachten magnetischen Streufelder mit der Magnetfelddetektionsvorrichtung.

Ein solches Verfahren ist aus der EP 0 176 932 A2 bekannt. Dieses bekannte Verfahren kann zur zerstörungsfreien Prüfung von Schweißnähten von geschweißten Rohren verwendet werden. Bei diesen Rohren handelt es sich um mit einer Längsnaht geschweißte Rohre. Zu diesem Zweck wird ein solches geschweißtes Rohr mit Hilfe von Dauermagneten quer zur Längserstreckung der Schweißnaht durch zwei rechtwinklig aufeinander stehende Magnetfelder magnetisiert. Als Magnetfelddetektionsvorrichtung sind eine Vielzahl von Hallgeneratoren nebeneinander die Schweißnaht selbst sowie auch benachbarte Bereiche abdeckend angeordnet. Während die zur Magnetisierung verwendeten Dauermagnete und die Hallgeneratoren ortsfest angeordnet sind, wird zur Prüfung eines Rohres dieses an den Dauermagneten und den Hallgeneratoren mit seiner Längsschweißnaht vorbeibewegt. Die Hallgeneratoren erfassen dabei die absolute Feldstärke des Magnetfeldes im Bereich der zu überprüfenden Schweißnaht.

Zur Kalibrierung der Magnetfelddetektionsvorrichtung wird in einem ersten Schritt ein fehlerfreies Rohr bzw. eine fehlerfreie Schweißnaht vermessen. Die ermittelten Feldstärken werden als sogenannte Kompensationsgrößen abgespeichert. Dabei dienen die Kompensationsgrößen insbesondere dazu, die von der Schweißnaht selbst hervorgerufenen magnetischen Streufelder zu eliminieren. Die tatsächlich zu untersuchende Längsschweißnaht eines geschweißten Rohres wird anschließend an der Magnetisierungsvorrichtu ng sowie der Magnetfelddetektionsvorrichtung vorbeigeführt. Durch getaktetes Erfassen der Magnetfeldstärken und durch eine anschließende rechnerische Kompensation der ermittelten Feldstärken mit den Kompensationsgrößen ergibt sich dann das Vorhandensein eines Fehlers oder eines fehlerfreien Abschnittes. Ein fehlerfreier Abschnitt liegt dann vor, wenn nach Subtraktion der Kompensationsgröße der Wert 0 oder etwa 0 ist; ist der Betrag der erfaßten Feldstärke deutlich ungleich 0, so läßt dies auf die Erfassung des Streufeldes eines in der Schweißnaht enthaltenen Fehlers schließen.

Nachteilig ist bei diesem Verfahren jedoch, daß bei der Verwendung von Hallgeneratoren zur Erzielung einer möglichst hohen Auflösung das Prüfverfahren bei einer magnetischen Sättigung durchgeführt werden muß. Daher werden entsprechend große Dauermagneten für die Magnetisierung benötigt. Aufgrund der Größe und des apparativen Aufwandes dieser Vorrichtung ist diese für einen mobilen Einsatz nicht geeignet.

Das bekannte Verfahren eignet sich daher nur zu werksseitigen Kontrolle hergestellter Rohre. Ein Einsatz dieser Vorrichtung bzw. dieses Verfahrens ist zur Überprüfung von Schweißnähten von Rohren nach Ihrer Verlegung ebenso ungeeignet wie zur Überprüfung von Querschweißnähten, mit welchen zwei Rohre im Bereich ihrer Stöße miteinander verbunden sind.

Der Vorteil dieses bekannten Verfahrens liegt in der Subtraktion des dem Schweißnahtstreufluß zuzuordnenden Kompensationssignales von den Ausgangssignalen der Magnetfelddetektionsvorrichtung beim Vorbeibewegen eines zu überprüfenden Rohres. Nachteilig ist jedoch der Starke Einfluß von immanenten Störungen, wie etwa solche, die durch die Rauhigkeit der Nahtüberhöhung hervorgerufen sind. Die Verwendung von Hallgeneratoren als Magnetfelddetektionsvorrichtung hat zwar zum Vorteil, daß diese in großer Zahl preisgünstig verwendbar sind. Diese weisen jedoch nur ein kleines Nutzsignal-/Störsignal-Verhältnis auf. Daher müssen bei Verwendung derartiger Detektoren Ungenauigkeiten hinsichtlich des Fehlernachweises sowie hinsichtlich der Feststellung von Fehlercharakteristiken hingenommen werden.

Magnetfelddetektionsvorrichtungen, die Gradienten erfassen und somit Gradientensonden genannt sind, haben ein deutlich besseres Nutzsignal/Störungssignal-Verhältnis. Eine solche Gradientensonde ist aus der DE 37 09 143 C2 bekannt. Durch fünf ringförmig angeordnete Elektromagnete wird in dem Prüfling ein magnetisches Drehfeld erzeugt. Zwischen den Schenkeln jedes Elektromagneten ist jeweils eine Gradientensonde zum Erfassen des Magnetfeldes angeordnet.

Während ein Prüfling an der Prüfeinrichtung vorbeibewegt wird, erhalten die Spulen nacheinander Betriebsspannungen entsprechend einer vorgegebenen Frequenz. Es entsteht dabei im Prüfling ein schrittweise weiterbewegtes Drehfeld, durch das die in diesem enthaltenen Fehler hindurchbewegt werden. Wird ein Fehler von dem schrittweise weiterbewegten Drehfeld erfaßt, entsteht ein Streufeld, dessen Richtung in Abhängigkeit vom Sektor des magnetischen Drehfeldes geändert wird. Durch die unterschiedliche Winkelposition der Gradientensonden wird von mindestens einer der Sonden der vom Fehler verursachte Streufluß gemessen. Der Meßwert wird angezeigt und von der Datenverarbeitungseinrichtung weiterverarbeitet.

Die bekannte Vorrichtung wird bei der Qualitätskontrolle eingesetzt und dient zum Detektieren von Gefügefehlern in einem länglichen Körper, beispielsweise einem Rohr. Durch das verwendete magnetische Drehfeld ist eine Prüfung auch im Endbereich eines solchen Rohres möglich.

Das bekannte Verfahren ist gegenüber Fehlern in Schweißnähten sehr unempfindlich, insbesondere ohne vorherige mechanische Bearbeitung, weil die Schweißnaht selbst eine Quelle für Magnetfelder darstellt.

Aus der JP 62-269 108 ist eine Vorrichtung bekannt, mit der die Penetrationstiefe einer zwei Rohre verbindenden Schweißnaht überprüfbar ist. Zu diesem Zweck wird die Vorrichtung in Querrichtung an mehreren Stellen über die Schweißnaht gefahren, wodurch Bereiche, in denen die Schweißnaht keine ausreichende Tiefe aufweist, durch eine geänderte Streufeldcharakteristik bemerkbar sind. Zu diesem Zweck muß die Vorrichtung rohrinnenseitig geführt werden. Auch diese Vorrichtung arbeitet mit einem gesättigten Magnetfeld, wobei eine Erfassung der Feldstärke vorgesehen ist. Zur Ermittlung von Fehlern innerhalb einer Schweißnaht ist diese Vorrichtung jedoch nicht geeignet.

Ausgehend von diesem diskutiertem Stand der Technik liegt der Erfindung daher die Aufgabe zugrunde, ein Verfahren zum zerstörungsfreien Prüfen einer zwei magnetisierbare Teilstücke verbindenden Schweißnaht vorzuschlagen, welches nicht nur eine Fehlererkennung mit hoher Zuverlässigkeit gewährleistet, sondern das auch für einen mobilen Einsatz vorgesehen ist.

Diese Aufgabe wird erfindungsgemäß dadurch gelöst, daß mit der Magnetfelddetektionsvorrichtung eine oder mehrere Resultierende erfaßt werden, die ausgesucht sind aus $\partial H_x/\partial x, \partial H_y/\partial x, \partial H_z/\partial x$ und $\partial H_x/\partial y$, wobei x, y, z Koordinatenachsen eines orthogonalen Koordinatensystems sind, bei welchem die x-Achse der Längserstreckung der Schweißnaht folgt, die y-Achse parallel zur Magnetisierungsrichtung des Prüflings und die z-Achse senkrecht zur Prüflingsoberfläche angeordnet sind, wobei in einem ersten Meßschritt eine Fehlererkennung durch Erfassen des Resultierenden einer der Magnetfeldkomponenten erfolgt.

Das erfindungsgemäße Verfahren verwendet keine aufwendige Kompensation zum Herausarbeiten des Fehlersignalanteils, sondern verwendet eine Magnetfelddetektionsvorrichtung, die zur Erfassung von Resultierenden ausgelegt ist. Die Erfinder haben nämlich erkannt, daß mit einer orientierten und gezielten Erfassung einer einzigen Resultierenden Fehlerbestimmungen mit einer sehr viel höheren Genauigkeit erfolgen können, als durch rechnerischen Vergleich eines Idealstückes mit einem Prüfling. Die Erfassung ganz bestimmter Resultierender, nämlich von solchen, auf denen sich Schweißnahtfehler besonders bemerkbar machen, hat zur Folge, daß als Magnetfelddetektionsvorrichtung eine einfache Gradientensonde vorgesehen sein kann.

Als Resultierende werden im Rahmen dieser Ausführungen die Projektionen eines Gradienten eines Vektors des Magnetfeldstärkenvektors $\vec{H}$ angesehen. Bei einem orthogonalen Koordinatensystem der genannten Art sind als Vektoren die Gradienten des Magnetfeldstärkenvektors in x-, y und z-Richtung erfaßbar. Die Projektion dieser Vektoren auf eine der Koordinatenachsen stellt dann die jeweilige Resultierende dar. Bezüglich der beanspruchten Resultierenden bedeutet dies beispielsweise für die Resultierende $\partial H_x/\partial x$: diese Resultierende ist die Projektion des Gradienten des Magnetfeldstärkenvektors $\vec{H}$ in x-Richtung auf die x-Achse des Koordinatensystems.

Erfindungsgemäß sind vier Resultierende erfaßbar, wobei in einem ersten Meßschritt zur Fehlererkennung bzw. Fehlerortung lediglich eine Resultierende der genannten vier erfaßt wird. Dabei macht sich die Erfindung die Tatsache zu nutze, daß das durch die Schweißnaht erzeugte Streufeld als Meßbasis dient, die sich in x-Richtung und somit in Richtung der Längsachse der Schweißnaht nicht oder nur unwesentlich ändert, sofern diese fehlerfrei ist. Die erfaßte Resultierende ist somit in dieser Richtung invariant bzw. weitestgehend invariant. Fehler, die in der Schweißnaht enthalten sind, erzeugen von ihrer Charakteristik her ein eigenes Streufeld. Dieses fehlerbedingte Streufeld überlagert dann das Streufeld der Schweißnaht und macht sich durch eine erhebliche Resultierendenänderung bemerkbar. Durch die unterschiedliche Streufeldcharakteristik lassen sich mit hoher Genauigkeit Oberflächenrauhigkeiten von Gefügefehlern, etwa Einschlüssen, Poren oder Rissen unterscheiden. Untersuchungen der Erfinder haben ergeben, daß es günstig ist, in einem Meßschritt lediglich eine Fehlererkennung bzw. eine Fehlerortung vorzunehmen, wobei zweckmäßigerweise eine der vier beanspruchten Resultierenden verwendet wird, gemäß denen jeweils der deutlichste Kontrast zwischen Nutzsignal und einem Störsignal besteht. Zweckmäßigerweise wird zu diesem Zweck die Resultierende $\partial H_z/\partial x$ verwendet. Mit Hilfe der Auswertung dieser Resultierenden erfolgt eine hinreichend zuverlässige Fehlererkennung.

Die Erfassung lediglich einzelner Resultierender ermöglicht nicht nur eine reine Fehlererkennung, sondern läßt auch eine Fehlerbeurteilung anhand der Charakteristik der beobachteten Fehlerkurve zu, da unterschiedliche Fehler, etwa Schrägrisse, Wurzelfehler, Poren oder Risse unterschiedliche Streufeldcharakteristika aufweisen, die zu unterschiedlichen Abbildungen durch die erfaßte Resultierende führen.

Zweckmäßigerweise wird diesem ersten Meßschritt ein zweiter Meßschritt nachgeschaltet, in dem eine zweite Resultierende des angelegten Magnetfeldes erfaßt wird, vorzugsweise der Resultierende $\partial Hy/\partial x$. Die Fehlerabbildung durch Erfassen der zweiten Resultierenden erlaubt eine Projektion des Fehlers auf die Schweißnahtoberfläche, so daß die Fehlergröße (Länge bzw. Breite) ermittelbar ist.

Durch Verwenden einer Gradientensonde, insbesondere einer Induktionsgradientensonde, ist die Empfindlichkeit der Magnetfelddetektionsvorrichtung ausreichend hoch, damit eine Schweißnahtprüfung selbst bei geringen Feldstärken möglich ist. Zu beachten ist lediglich, daß die Feldstärke, in dem die Messung erfolgt, größer ist als in dem Prüfling vorhandene Restmagnetfelder, etwa vorangegangener formgebender Behandlungen.

Weitere Vorteile der Erfindung sind Bestandteile der Unteransprüche sowie der nachfolgenden Figurenbeschreibung. Es zeigen:

Fig. 1:    eine zwei magnetisierbare Prüfstücke verbindende Schweißnaht im Querschnitt mit dem schematisierten Feldlinienverlauf eines induzierten Magneffeldes,

Fig. 2:    ein schematisiertes Blockdiagramm zur Meßanordnung beim zerstörungsfreien Prüfen von Schweißnähten mit einer Gradientensonde,

Fig. 3:    ein Diagramm zur Darstellung eines in einer Schweißnaht enthaltenen Fehlers und

Fig. 4:    ein Diagramm zur Darstellung eines weiteren in einer Schweißnaht enthaltenen Fehlers.

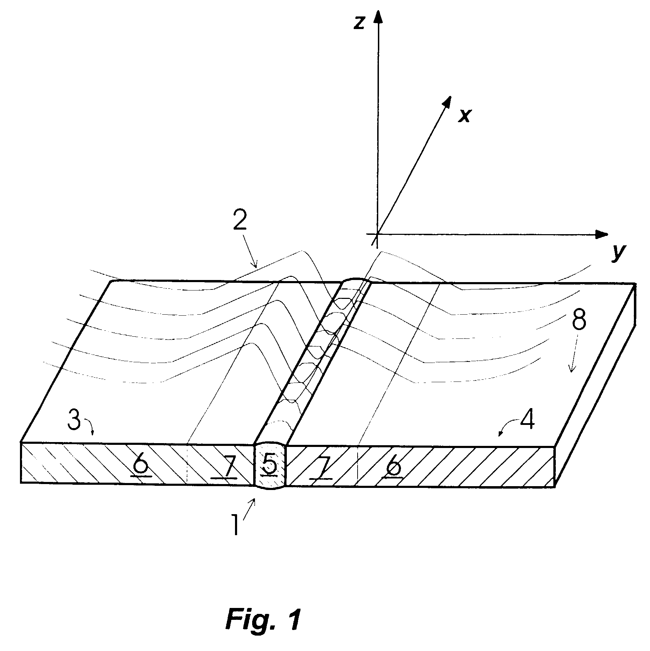

In Figur 1 ist der Querschnitt eines Prüflings 1 mit einer Schweißnaht 5 dargestellt. Prüfling 1 besteht aus zwei Teilstücken 3, 4, die mit einer Schweißnaht 5 verbunden sind. Durch den Schweißvorgang besteht der Prüfling 1 aus drei Zonen unterschiedlicher magnetischer Eigenschaften, nämlich aus:

-    einer Grundmaterialzone 6, die von der Erwärmung beim Schweißen nicht beeinflußt wurde,
-    zwei Abschnitten 7, deren magnetische Eigenschaften durch die Erwärmung verändert worden sind,
-    der Schweißnaht 5 selbst.

In Figur 1 ist schematisch der Feldlinienverlauf 2 auf der Oberfläche des Prüflings 1 dargestellt. Zur Orientierung ist in Figur 1 ein orthogonales Koordinatensystem mit den Koordinatenachsen x, y und z dargestellt. In Figur 1 ist zu sehen, daß in y-Richtung Ungleichmäßigkeiten des Magnetfeldes, die durch die Unterschiede der Magneteigenschaften von der Schweißnaht 5 selbst, der von der Erwärmung beeinflußten Zonen 7 und dem Grundmaterial 6, feststellbar sind. Magnetfeldänderungen entlang der Schweißnaht 5 und somit in x-Richtung sind dagegen sehr gering und allenfalls etwa durch die Schweißnahtrauhigkeit beeinflußt. Diese Änderungen werden als quasi invariant gegenüber einem zu detektierenden Fehlersignal (= Nutzsignal) angesehen. Im Rahmen dieser Beschreibung ist das Störsignal dasjenige Signal, dessen Varianz durch die Schweißnaht 5 selbst und nicht Fehler bedingt ist. Wenn durch einen Fehler in der Schweißnaht 5 eine Magnetfeldänderung auftritt, kann das Fehlerstreufeld auf dem Hintergrund der Streufelder der Schweißnaht 5 selbst nur durch das Fahren einer Gradientensonde entlang der Schweißnaht in x-Richtung zuverlässig erfaßt werden.

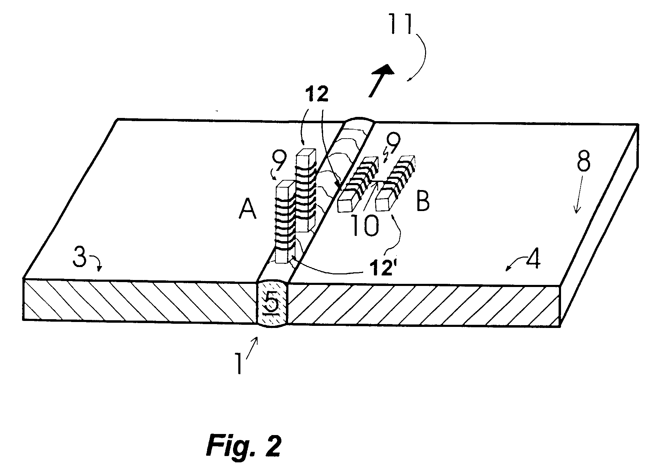

In Figur 2 sind zwei Meßanordnungen einer Gradientensonde bei der Schweißnahtüberprüfung dargestellt: Eine Fehlerortungsanordnung A, bei der die Resultierende $\partial Hz/\partial x$ erfaßt wird und eine Fehlerabbildungsanordnung B, bei der die Resultierende $\partial Hx/\partial y$ erfaßt wird. Die Fehlerortungsanordnung A der Gradientensonde 9 wird durch eine Spulenkemanordnung senkrecht zu der Schweißnahtoberfläche charakterisiert. Die den lotrechten Spulenabstand bildende Basis 10 der Gradientensonde 9 wird parallel zu der Achse der Schweißnaht 5 - in x-Richtung - angeordnet. Bei der Fehlerabbildungsanordnung B sind die Spulenkeme in x-Richtung und die Basis 10 in y-Richtung orientiert.

Das Verfahren ist sowohl für die Überprüfung im aufgebrachten Magnetfeld als auch im Remanenzfeld im Prüfling 1 durchführbar. Beispielsweise bei einer Prüfung von längeren Schweißnähten 5, etwa bei miteinander verschweißten Rohrstößen, ist eine Fehlererfassung durch Messungen im Remanenzfeld bevorzugt durchführbar. Dabei wird als ausreichend angesehen, wenn die magnetische Feldstärke der Tangentialkomponente auf der Schweißnahtoberfläche zwischen 50 - 1000 A/m, insbesondere zwischen 60 - 120 A/m beträgt. Dies hat zum Vorteil, daß nur geringe Energie aufgewendet werden muß, um das Magnetfeld in den Prüfling 1 zu induzieren. Folglich kann die Induzierung mit einem Permanentmagneten erfolgen, der ohne zusätzliche Energieversorgung an jedem Ort einsetzbar ist.

Die Magnetisierung des Prüflings 1 erfolgt etwa senkrecht zur Längserstreckung der Schweißnaht 5 und somit parallel zur y-Richtung. Bei Rohren kann die Magnetisierung dadurch erzielt werden, daß der zur Magnetisierung des Prüflings 1 verwendete Magnet einmal umfänglich außenseitig punktweise um das Rohr herumgefahren wird, wobei der Nordpol auf der einen und der Südpol auf der anderen Seite der Schweißnaht 5 angeordnet ist.

Zweckmäßigerweise befindet sich bei der Magnetisierung des Prüflings 1 der Nordpol sowie der Südpol des für die Magnetisierung verwendete Magnetes in einem etwa gleichen Abstand von der Schweißnaht 5. Insbesondere bei einem Einsatz des Verfahrens im Gelände ist es zweckmäßig zur Magnetisierung einen Permanentmagneten zu verwenden. Damit dieser für unterschiedliche Anforderungen passend ausgebildet ist, kann ein Permanentmagnet verwendet werden, dessen beiden Pole durch einen flexiblen magnetischen Leiter verbunden sind.

Das erfindungsgemäße Prüfverfahren wird wie folgt durchgeführt: Das Aufsetzen eines Permanentmagneten erfolgt an einem Ende der Schweißnaht 5 des Prüflings1. In etwa gleichem Abstand von der Schweißnaht 5 eines Prüflings 1 wird auf der einen Seite der Schweißnaht 5 der Nordpol und auf der anderen Seite der Schweißnaht 5 der Südpol des Permanentmagneten aufgesetzt. Der Permanentmagnet wird anschließend parallel zur Längserstreckung der Schweißnaht 5 unter Beibehaltung eines etwa gleichen Abstandes von Nordpol und Südpol von der Schweißnaht 5 entlang dieser punktweise geführt. Nach Entfernen des Permanentmagneten vom Prüfling 1 ist im Prüfling 1 ein Remanenzmagnetfeld vorhanden.

Bevor eine Gradientensonde 9 zum Erfassen von Fehlerstreufeldern über die Schweißnaht 5 geführt wird, wird diese kalibriert. Die Gradientensonde 9 wird zu diesem Zweck über eine Referenzschweißstrecke geführt, in der bekannte, vordefinierte Fehler enthalten sind. Die in einem Referenzstück enthaltenen Fehler weisen unterschiedlichen Größen auf. In Abhängigkeit von der zu detektierenden Größe der Felder wird die Gradientensonde 9 eingestellt bzw. kalibriert.

Um Fehler in der Schweißnaht 5 des Prüflings 1 zu detektieren, wird die kalibrierte Gradientensonde 9 in einem ersten Schritt etwa in der Mitte der Schweißnaht 5 in Richtung des Pfeiles 11 - in x-Richtung - in ihrer Fehlerortungsanordnung geführt. Bei dem in der Gradientensonde 9 verwendeten Wandler handelt es sich um zwei Spulenanordnungen 12 und 12', deren Spulenkerne eine hohe magnetische anfängliche Suszeptibilität aufweisen. Die in diesem Meßschnitt erfaßte Resultierende $\partial Hz/\partial x$ wird einer nicht dargestellten Auswerteeinheit zugeführt, die entsprechend der voreingestellten Kalibrierung bestimmte Änderungen der Resultierenden als Fehler anzeigt.

Ausgenutzt wird bei dem Bewegen der Gradientensonde 9 entlang der x-Achse, daß, wie in Figur 1 gezeigt, in der Achse der Schweißnaht 5 sich eine sogenannte magnetische Neutralzone ausgebildet hat. Diese magnetische Neutralzone ist diejenige Linie, auf der die Projektion des Magnetfeldstärkenvektors auf die z-Achse 0 ist. Auch wenn die Gradientensonde 9 im Prinzip in verschiedenen Richtungen über die Oberfläche des Prüflings 1 bewegt werden kann, ist es vorteilhaft, die Gradientensonde 9 lediglich in Richtung des Pfeiles 11 und somit in x-Richtung des Koordinatensystems oberhalb der Schweißnaht zu bewegen.

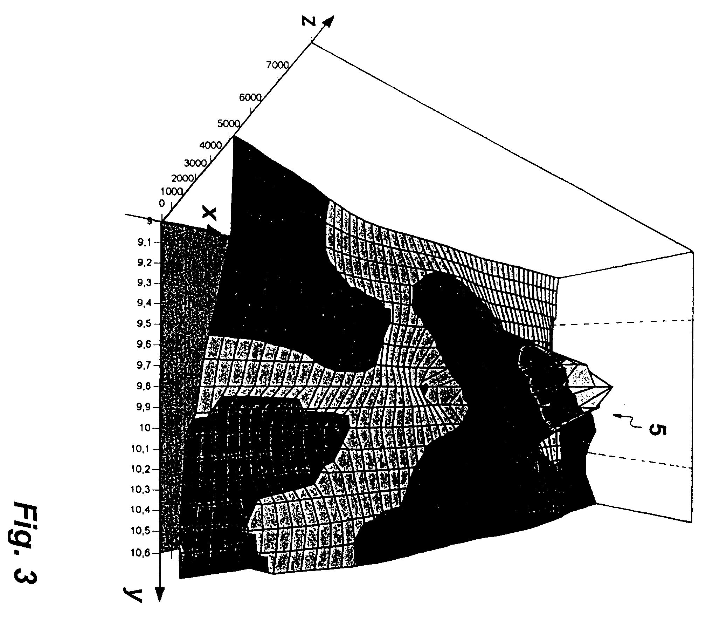

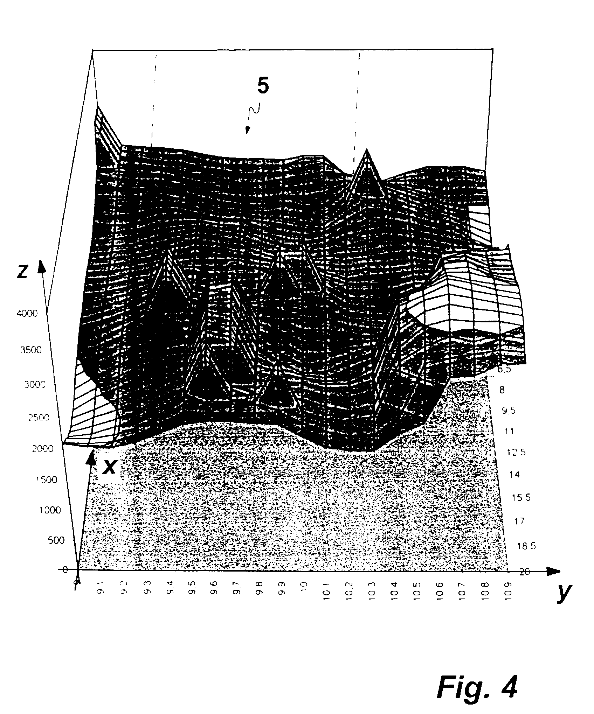

Beispielhaft sind in den Figuren 3 und 4 graphisch Fehler abgebildet, die durch mehrfaches Verfahren auf parallelen Bahnen der Gradientensonde 9 entlang einer Schweißnaht 5 sowie den Schweißnahtnahbereichen in x-Richtung erstellt worden ist. Dabei stellt Figur 3 die Abbildung eines Schrägrisses und Figur 4 die Abbildung eines Wurzelfehlers dar. Diese Fehlererfassung erfolgte durch eine Gradientensondenanordnung in der Fehlerortungsanordnung A, wobei als Resultierende $\partial Hz/\partial x$ erfaßt worden ist. Deutlich erkennbar ist die unterschiedliche Abbildung der beiden unterschiedlichen Fehlertypen. Der Bereich der Schweißnaht 5 ist in diesen Figuren gekennzeichnet.

Beim Verfahren der Gradientensonde 9 in x-Richtung der Schweißnaht 5 werden beispielsweise mit Kreide diejenigen Positionen auf dem Prüfling markiert, an denen Fehler geortet worden sind.

Zur Feststellung, ob zwei geortete Fehler Einzelfehler sind oder ob diese die Endpunkte eines zusammenhängenden Fehlers sind, wird in einem zweiten Meßschritt die Gradientensonde 9 in der Fehlerabbildungsanordnung B in x-Richtung über die Schweißnaht bewegt. Die Abbildung eines zusammenhängenden Fehlers ist in dem ersten Meßschritt in der Fehlerortungsanordnung A nicht möglich, da Gradienten erfaßt werden und innerhalb eines länglichen Fehlers, etwa eines Risses, keine Änderungen bzw. nur unwesentliche Änderungen auftreten. In dem zweiten Meßschritt wird die Resultierenden $\partial Hx/\partial y$ erfaßt, wodurch eine Fehlerabbildung auf die Oberfläche des Prüflings 1 möglich ist. In dieser Meßanordnung lassen sich diejenigen Bereiche abbilden, die durch einen länglichen Fehler bedingt ein Streufeld verursachen. Handelt es sich bei zwei detektierten Fehler im ersten Meßschritt tatsächlich um die Endpunkte eines länglichen Fehlers, so erfolgt in dem zweiten Meßschritt dessen Kartierung. Gleichfalls eignet sich die Fehlerabbildungsanordnung B zum Kartieren der Grenzen des Fehlers innerhalb der x-y-Ebene.

**Zusammenstellung der Bezugszeichen**

1 Prüfling
2 Magnetkraftlinien
3 Teilstück des Prüflings
4 Teilstück des Prüflings
5 Schweißnaht
6 Äußerer Abschnitt
7 Innerer Abschnitt
8 Äußere Oberfläche
9 Gradientensonde
10 Basis der Gradientensonde
11 Führungsrichtung
12 Spulenanordnungen

A Fehlerortunsanordnung
B Fehlerabbildungsanordnung

**Patentansprüche**

1. Verfahren zum zerstörungsfreien Prüfen einer zwei magnetisierbare Teilstücke (3, 4) verbindenden Schweißnaht (5) mit folgenden Schritten: Magnetisieren des aus den Teilstücken (3, 4) und der Schweißnaht (5) bestehenden Prüflings (1) mit einem Magnetfeld (2), dessen magnetische N-S-Ausrichtung quer zur Längserstreckung der Schweißnaht (5) angeordnet ist und Aneinandervorbeibewegen einer Magnetfelddetektionsvorrichtung (9), und der Schweißnaht (5) in Längserstreckung der Schweißnaht (9) sowie Erfassen der durch Fehler in der Schweißnaht verursachten magnetischen Streufelder mit der Magnetfelddetektionsvorrichtung (9), **dadurch gekennzeichnet**, daß mit der Magnetfelddetektionsvorrichtung (9) eine oder mehrere Resultierende erfaßt werden, die ausgesucht sind aus $\partial H_x/\partial x$, $\partial H_y/\partial x$, $\partial H_z/\partial x$ und $\partial H_x/\partial y$, wobei x, y, z Koordinatenachsen eines orthogonalen Koordinatensystems sind, bei welchem die x-Achse der Längserstreckung der Schweißnaht (5) folgt, die y-Achse parallel zur Magnetisierungsrichtung des Prüflings (1) und die z-Achse senkrecht zur Prüflingsoberfläche angeordnet sind, wobei in einem ersten Meßschritt eine Fehlererkennung durch Erfassen des Gradienten einer der Magnetfeldkomponenten erfolgt.

2. Verfahren nach Anspruch 1, **dadurch gekennzeichnet**, daß in einen an den ersten Meßschritt anschließenden Meßschritt eine Fehlerabbildung durch Erfassen der Resultierenden einer zu der Resultierenden des ersten Meßschrittes unterschiedlichen Resultierenden erfolgt.

3. Verfahren nach Anspruch 1 und 2, **dadurch gekennzeichnet**, daß für die Fehlererkennung des ersten Meßschrittes die Resultierende $\partial H_z/\partial x$ und für die Fehlerabbildung des zweiten Meßschrittes die Resultierende $\partial H_x/\partial y$ erfaßt werden.

4. Verfahren nach einem der Ansprüche 1 bis 3, **dadurch gekennzeichnet**, daß als Magnetfelddetektionsvorrichtung eine Induktionsgradientensonde (9) verwendet wird.

5. Verfahren nach Anspruch 4, **dadurch gekennzeichnet**, daß zur Erfassung der Resultierenden $\partial H_z/\partial x$ die Spulenkerne der Gradientensonde senkrecht zur Prüflingsoberfläche und die Basis (10) in x-Richtung ausgerichtet ist, und daß zum Erfassen der Resultierenden $\partial H_x/\partial y$ die Spulenkerne der Gradientensonde parallel zur Oberfläche des Prüflings (1) und die Basis (10) in x-Richtung des Koordinatensystems angeordnet sind.

6. Verfahren nach einem der Ansprüche 1 bis 5, **dadurch gekennzeichnet**, daß der Südpol und der Nordpol des zur Magnetisierung des Prüflings (1) verwendeten Magneten jeweils mit etwa demselben Abstand von der Mitte der Schweißnaht (5) ausgerichtet werden.

7. Verfahren nach einem oder mehreren der Ansprüche 1 bis 6, **dadurch gekennzeichnet**, daß der Prüfling (1) mit einem Permanentmagneten mit einem die Pole verbindenden flexiblen Magnetleiter magnetisiert wird.

8. Verfahren nach einem oder mehreren der Ansprüche 1 bis 7, **dadurch gekennzeichnet**, daß die Feldstärke des den Prüfling (1) magnetisierenden Magnetfeldes (2) auf der Schweißnahtoberfläche 50 - 1000 A/m, insbesondere 60 - 120 A/m, beträgt.

9. Verfahren nach einem der Ansprüche 1 bis 8, **dadurch gekennzeichnet**, daß die Erfassung der Resultierenden der Magnetfeldkomponenten im Restmagnetfeld erfolgt.

**Fig. 1**

**Fig. 2**

*Fig. 3*

Fig. 4

## EUROPÄISCHER RECHERCHENBERICHT

Europäisches
Patentamt

Nummer der Anmeldung

EP 97 11 6353

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP 0 176 932 A (NUKEM)<br>* Zusammenfassung *<br>* Seite 7, Zeile 15 - Seite 8, Zeile 9; Abbildung 1 *<br>--- | 1-9 | G01N27/82 |
| D,A | DE 37 09 143 A (NUKEM)<br>* Zusammenfassung *<br>* Spalte 3, Zeile 41 - Spalte 4, Zeile 9; Abbildung 1 *<br>--- | 1-9 | |
| A | US 4 647 856 A (MELGUI ET AL.)<br>* Zusammenfassung *<br>* Spalte 2, Zeile 13 - Zeile 38; Abbildung 3 *<br>----- | 1-9 | |
| | | | **RECHERCHIERTE SACHGEBIETE (Int.Cl.6)**<br><br>G01N |

Der vorliegende Recherchenbericht wurde für alle Patentansprüche erstellt

| Recherchenort | Abschlußdatum der Recherche | Prüfer |
|---|---|---|
| DEN HAAG | 15.Dezember 1997 | Kempf, G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)